# EUROPEAN PATENT APPLICATION

(11) **EP 4 729 594 A1**
(43) Date of publication of application: **22.04.2026**
(21) Application number: 24306698.2
(22) Date of filing: 16.10.2024
(51) Int. Cl.: C10G 9/16, C10G 9/20, G01J 5/00, G01J 5/48

(54) **CONTROL OF HYDROCARBON CRACKING FURNACE OPERATION USING THERMAL IMAGING**

(71) Applicant: Technip Energies France, 92741 Nanterre Cedex (FR)
(72) Inventor: Middleton, Jim, 92741 Nanterre Cedex (FR)
(74) Representative: Edson, Russell Gregory

(57) **Abstract**

A system for automatically controlling an operation of a hydrocarbon cracking furnace using radiant coil tube metal temperature measurement data obtained from one or more thermal imaging devices is disclosed. The tube metal temperature measurement data generated by the thermal imaging devices may be provided to a controller that may also be in communication with one or more heat sources used to heat the radiant coils. When multiple heat sources are present, the controller can independently control the heat output of each heat source based on the received tube metal temperature measurement data, which can allow the temperature at different locations along the radiant coils to be varied. In one example, the temperature at different locations along the radiant coils can be varied during a decoking operation in correlation with varying degrees of coke accumulation within the radiant coils.

## Description

### Technical Field

The present disclosure relates generally to hydrocarbon cracking furnaces, and more particularly although not necessarily exclusively, to controlling a hydrocarbon cracking furnace process using radiant coil temperature measurement data obtained by thermal imaging.

### Background

Hydrocarbon cracking refers to the process of using heat to break down heavier hydrocarbon molecules into lighter hydrocarbon molecules such as, for example, ethylene and propylene. Hydrocarbon cracking may be performed in a hydrocarbon cracking furnace, which can operate by passing a hydrocarbon feedstock through radiant coils in a radiant section of the furnace where the hydrocarbon feedstock is subjected to a temperature high enough to crack the hydrocarbon inside the radiant coils. Control of the hydrocarbon cracking operation may be based on a proper temperature of the hydrocarbon feedstock during cracking, and thus accurate measurement of the hydrocarbon feedstock or the radiant coils during a cracking operation may be desirable. Coke is also generated within the radiant coils as a byproduct of the hydrocarbon cracking process. Coke accumulation within the radiant coils can raise the tube metal temperature of the radiant coils and can cause a pressure drop within the radiant coils. A decoking operation must be periodically performed to remove accumulated coke from the radiant coils. The decoking operation may include passing high temperature steam and air through the radiant coils to remove the accumulated coke. Changes in radiant coil temperature over time may be indicative of coke accumulation within the radiant coils, and knowledge of radiant coil temperature profile during a decoking operation can help to optimize the decoking operation by revealing locations of remaining coke deposits as well as radiant coil hot spots that may develop during a decoking operation. Therefore, accurate measurement of the radiant coil temperature during a decoking operation may also be desirable.

### Summary

As used below, any reference to a series of examples is to be understood as a reference to each of those examples disjunctively (e.g., "Examples 1-4" is to be understood as "Examples 1, 2, 3, or 4").

Example 1 is a system for controlling a hydrocarbon cracking furnace operation. The system includes a hydrocarbon cracking furnace having a radiant section, a radiant section heating compartment, a radiant section heat source, and a radiant coil at least partially extending through the radiant section heating compartment. A thermal imaging device is arranged outside of the heating compartment, and the thermal imaging device has a field of view encompassing at least a portion of the radiant coil. The thermal imaging device is operable to measure a tube metal temperature of the portion of the radiant coil in the field of view. A controller is communicatively coupled to the thermal imaging device and is operable to control a heat output of the radiant section heat source based on tube metal temperature measurement data received from the thermal imaging device.

Example 2 is Example No. 1, further comprising a viewing window in a wall of a radiant section heating compartment through which the radiant coil is within the field of view of the thermal imaging device. The viewing window can be an aperture through the wall that is sealed by a material that is transparent or semi-transparent to infrared electromagnetic radiation or a portion of the wall that is transparent or semi-transparent to infrared electromagnetic radiation.

Example 3 is Example No. 1 or Example No. 2, wherein a plurality of thermal imaging devices are present and are distributed along a path of the radiant coil through the radiant section heating compartment.

Example 4 is Example No. 3, wherein a plurality of radiant coils are present in the radiant section heating compartment and are within a collective field of view of the plurality of thermal imaging devices.

Example 5 is Example No. 4, wherein a plurality of radiant section heat sources are present and are distributed along a path of the plurality of radiant coils through the radiant section heating compartment.

Example 6 is Example No. 5, wherein coil outlet temperature measurement data is also receivable by the controller and is usable by the controller as a primary control parameter governing an overall heat input to the heating compartment, and wherein tube metal temperature measurement data is additionally usable by the controller to control an amount of heat contributed to the overall heat input by each of the plurality of radiant section heat sources.

Example 7 is any one of Example No. 1 through Example No. 6, wherein the hydrocarbon cracking furnace is a combustion-heated hydrocarbon cracking furnace. In the combustion-heated hydrocarbon cracking furnace, the radiant section includes a plurality of burner assemblies that generate heat by a combustion of fuel received from a combustible fuel source. A fuel regulator is communicatively coupled to the controller. The fuel regulator is also interposed between the combustible fuel source and the plurality of burner assemblies and includes a plurality of fuel control valves. Each respective fluid control valve is fluidly connected to a corresponding one of the burner assemblies by a fuel supply line. The controller is operable to independently control a heat output of each burner assembly by selectively operating the fuel control valves to regulate a flow of the fuel to each burner assembly.

Example 8 is any one of Example No. 1 through Example No. 6, wherein the hydrocarbon cracking furnace is an electric hydrocarbon cracking furnace. In the electric hydrocarbon cracking furnace, the radiant section includes a plurality of electric heating elements that generate heat by converting electrical energy received from an electrical energy source. A plurality of electric power supplies are communicatively coupled to the controller, and each respective electric power supply is electrically connected between the electrical energy source and a corresponding one of the electric heating elements. The controller is operable to independently control a heat output of each electric heating element by selectively operating the electric power supplies to regulate a transmission of electrical energy to each electric heating element.

Example 9 is a method that includes arranging a thermal imaging device outside of a radiant section heating compartment of a radiant section of a hydrocarbon cracking furnace, where the hydrocarbon cracking furnace further includes a radiant section heat source and a radiant coil that extends at least partially through the radiant section heating compartment. The thermal imaging device has a field of view encompassing at least a portion of the radiant coil. The method also includes measuring a tube metal temperature of the portion of the radiant coil in the field of view using the thermal imaging device and receiving, by a controller, tube metal temperature measurement data from the thermal imaging device. The method additionally includes controlling, by the controller, based on the tube metal temperature measurement data, a heat output of the radiant section heat source.

Example 10 is Example No. 9, wherein a plurality of thermal imaging devices are present and are distributed along a path of the radiant coil through the radiant section heating compartment.

Example 11 is Example No. 10, wherein a plurality of radiant coils are present in the radiant section heating compartment and are within a collective field of view of the plurality of thermal imaging devices.

Example 12 is Example No. 11, wherein a plurality of radiant section heat sources are present and are distributed along a path of the plurality of radiant coils through the radiant section heating compartment.

Example 13 is Example No. 12, wherein coil outlet temperature measurement data is also received by the controller and is used by the controller as a primary control parameter to govern an overall heat input to the heating compartment, and wherein the tube metal temperature measurement data is additionally used by the controller to control an amount of heat contributed to the overall heat input by each of the plurality of radiant section heat sources.

Example 14 is any one of Example No. 9 through Example No. 13, wherein the hydrocarbon cracking furnace is a combustion-heated hydrocarbon cracking furnace. In the combustion-heated hydrocarbon cracking furnace, the radiant section includes a plurality of burner assemblies that generate heat by a combustion of fuel received from a combustible fuel source. A fuel regulator is communicatively coupled to the controller. The fuel regulator is also interposed between the combustible fuel source and the plurality of burner assemblies and includes a plurality of fuel control valves. Each respective fluid control valve is fluidly connected to a corresponding one of the burner assemblies by a fuel supply line. The controller independently controls a heat output of each burner assembly by selectively operating the fuel control valves to regulate a flow of the fuel to each burner assembly.

Example 15 is any one of Example No. 9 through Example No. 13, wherein the hydrocarbon cracking furnace is an electric hydrocarbon cracking furnace. In the electric hydrocarbon cracking furnace, the radiant section includes a plurality of electric heating elements that generate heat by converting electrical energy received from an electrical energy source. A plurality of electric power supplies are communicatively coupled to the controller, and each respective electric power supply is electrically connected between the electrical energy source and a corresponding one of the electric heating elements. The controller independently controls a heat output of each electric heating element by selectively operating the electric power supplies to regulate a transmission of electrical energy to each electric heating element.

Example 16 is any one of Example No. 9 through Example No. 15, wherein the hydrocarbon cracking furnace operation is a radiant coil decoking operation.

Example 17 is Example No. 16, wherein measurement data indicating an amount of carbon monoxide present in a decoking effluent is also received by the controller and is used in part by the controller to control the heat output of the radiant section heat source during the radiant coil decoking operation.

Example 18 is a method of monitoring a hydrocarbon cracking furnace. The method includes arranging at least one thermal imaging device outside of a radiant section of the hydrocarbon cracking furnace with a field of view encompassing at least a portion of a radiant coil in the radiant section. The method also includes measuring, during a hydrocarbon cracking operation, a tube metal temperature of the portion of the radiant coil in the field of view using the thermal imaging device to generate tube metal temperature measurement data, and transmitting the tube metal temperature measurement data to a computing device. The method additionally includes determining, by a processor of the computing device, by analyzing the tube metal temperature measurement data, that a change in the measured tube metal temperature over time or a measured temperature value at one or more locations of the radiant coil that has reached or exceeds a predetermined temperature, indicates a need to perform a decoking operation on the radiant coil. The method further includes initiating or scheduling, by the computing device, a decoking operation on the radiant coil.

Example 19 is Example No. 18, wherein the tube metal temperature measurement data is continuously or periodically provide to the computing device.

Example 20 is Example No. 18 or Example No. 19, wherein the computing device also controls the decoking operation.

### Brief Description of the Drawings

FIG. 1 is a schematic representation of a hydrocarbon cracking system including a combustion heated hydrocarbon cracking furnace according to one example configuration.
FIG. 2 is a schematic representation of a hydrocarbon cracking system including an electrically heated hydrocarbon cracking furnace according to one example configuration.
FIG. 3 is an enlarged view of a portion of a radiant section of a hydrocarbon cracking furnace equipped with a tube metal temperature process control system according to one example configuration.
FIG. 4 is a schematic representation of a combustion-heated hydrocarbon cracking furnace decoking operation control system according to one example configuration.
FIG. 5 is a schematic representation of an electrically-heated hydrocarbon cracking furnace decoking operation control system according to one example configuration.
FIG. 6 is a block diagram of a computing device that can be used as a controller for controlling a hydrocarbon cracking furnace operation according to one example configuration.
FIG. 7 is a flowchart of a method of controlling a hydrocarbon cracking furnace decoking operation according to one example.

### Detailed Description

Certain aspects and examples of the present disclosure relate to a system for automatically controlling an operation of a hydrocarbon cracking furnace using radiant coil temperature data obtained from one or more thermal imaging devices. In one example, the operation may be radiant coil decoking operation. In another example, the operation may be a monitoring operation that is usable to determine when decoking of the radiant coils is required. In one example, the hydrocarbon cracking furnace may be used to produce ethylene from another hydrocarbon feedstock. In some examples, the hydrocarbon cracking furnace may be a steam cracking furnace wherein a hydrocarbon feedstock is diluted with steam prior to cracking in a radiant section of the furnace.

The system may include one or more thermal imaging devices that are located outside of a heating compartment of a radiant section of the hydrocarbon cracking furnace but have a field of view of the radiant coils, such as through one or more corresponding viewing windows or areas of the heating compartment that are otherwise transparent or semi-transparent to infrared electromagnetic radiation. The thermal imaging devices can be configured to measure a tube metal temperature (i.e., surface temperature) of at least some portions of the radiant coils. Tube metal temperature measurement data from the thermal imaging devices may be provided to a controller that may also be in communication with one or more heat sources used to heat the radiant coils. The tube metal temperature measurement data may be continuously provided to the controller in some examples.

In some examples, the controller can cause the heat output of some or all of the heat sources to be independently adjusted based on the received tube metal temperature measurements. This can allow, for example, the temperature at different locations along the radiant coils to be varied in correlation with varying degrees of coke accumulation within the radiant coils, which can enhance a decoking operation and may also avoid the generation of hotspots that can damage the radiant coils. Such control over the heat output of the heat sources may also be usable to better control a hydrocarbon cracking operation, such as by selectively adjusting the temperatures of different areas of the radiant coils to optimize cracking of the hydrocarbon feedstock as it passes therethrough, while simultaneously maintaining a predetermined overall heat input to the radiant coils and a corresponding target coil outlet temperature.

In some examples, the hydrocarbon cracking furnace may be combustion heated - meaning that the heat source(s) used to heat the radiant coils of the hydrocarbon cracking furnace operate by burning a combustible fuel. For example, the hydrocarbon cracking furnace may include one or more burners that can inject combustion heat into the heating compartment. In other examples, the hydrocarbon cracking furnace may be electrically heated - meaning that the heat sources used to heat the radiant coils of the hydrocarbon cracking furnace are configured to convert electrical energy into heat. For example, one or more electric heating elements can inject heat into the heating compartment. In some examples, individual burners or individual electric heating elements may be controlled by the controller. In other examples, cooperating sets (e.g., pairs) of burners or electric heating elements may be controlled by the controller.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

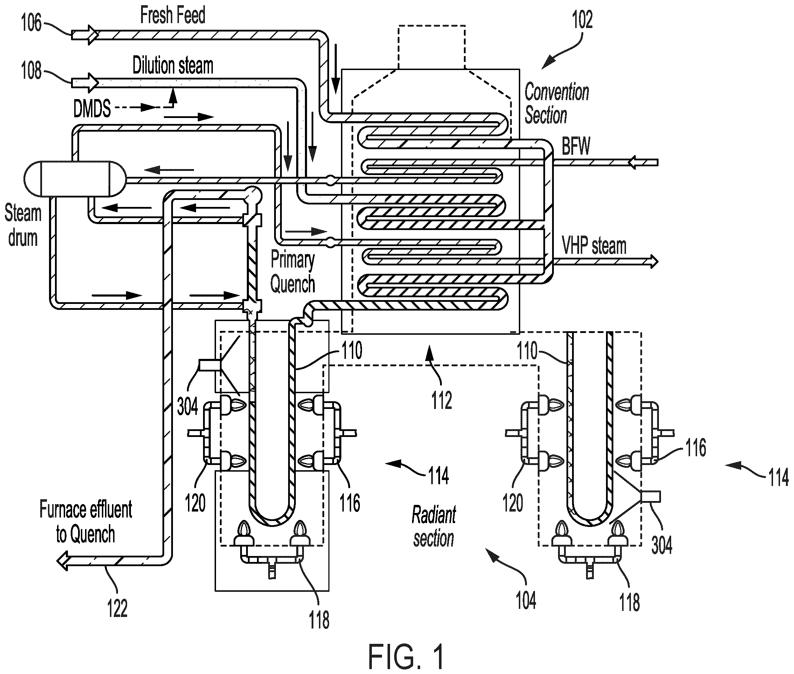

FIG. 1 is a schematic representation of a hydrocarbon cracking system including a combustion-heated hydrocarbon cracking furnace 100 according to one example configuration. As shown, this example of the hydrocarbon cracking furnace 100 is a steam cracking furnace and includes at least a convection section 102 and a radiant section 104. A hydrocarbon feedstock 106 and dilution steam 108 may be circulated through the convection section 102 for preheating of the hydrocarbon feedstock 106 and the dilution steam 108. The hydrocarbon feedstock 106 may thereafter be combined with the dilution steam 108 to create a steam-diluted hydrocarbon feedstock that is directed to the radiant section 104 of the hydrocarbon cracking furnace 100 for cracking of the hydrocarbon feedstock.

The steam-diluted hydrocarbon feedstock may travel through radiant coils 110 that are disposed within a heating compartment 112 of the radiant section 104 of the hydrocarbon cracking furnace 100. As represented in FIG. 1, the radiant section 104 may include multiple radiant coils 110. The radiant coils 110, and the steam-diluted hydrocarbon feedstock therein, are heated in the radiant section 104 to a temperature sufficient to cause a pyrolysis reaction that can crack the hydrocarbon feedstock. Cracking of the hydrocarbon feedstock in the radiant section 104 results in a cracked effluent gas 122 that can be directed from the radiant section 104 to a downstream location, such as to a quench tower or another apparatus, for cooling and separation of the cracked effluent gas 122. The cracking of the hydrocarbon feedstock within the radiant coils 110 is also the mechanism by which coke can be produced and deposited in the radiant coils 110.

In this example of the hydrocarbon cracking furnace 100, the heat used to crack the hydrocarbon feedstock in the radiant coils 110 is generated by multiple combustion burner assemblies 114 that are arranged along a path of the radiant coils 110 through the heating compartment 112. In other examples, a lesser or greater number of combustion burner assemblies may be used. For example, only a single combustion burner assembly 114 (e.g., a bottom burner assembly) may be present. The combustion burner assemblies 114 are configured to burn a combustible fuel and to direct the heat of combustion into the heating compartment 112 to heat the hydrocarbon feedstock in the radiant coils 110.

In this example, the combustion burner assemblies 114 more specifically include a first side burner assembly 116, a bottom burner assembly 118, and a second side burner assembly 120, which are distributed along the path of the radiant coils 110 to thoroughly and uniformly heat the hydrocarbon feedstock in the radiant coils 110. The presence of the first side burner assembly 116, bottom burner assembly 118, and second side burner assembly 120 can also allow for better control over a hydrocarbon cracking operation performed in the radiant coils 110 or a decoking operation performed on the radiant coils 110. As is schematically represented in FIG. 1, thermal imaging devices 304 (described in more detail below) may be arranged outside the heating compartment 112 with a field of view encompassing at least a portion of the radiant coils 110 to measure a tube metal temperature of the portion of the radiant coils 110 in the field of view. In FIG. 1, the thermal imaging devices 304 are shown only for purposes of illustration, and the number and arrangement of the thermal imaging devices 304 may be different than what is shown.

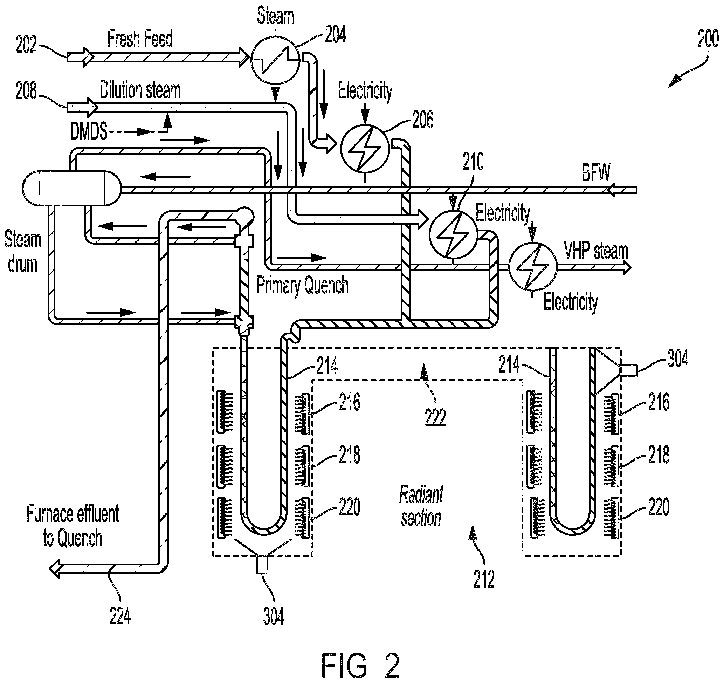

FIG. 2 is a schematic representation of a hydrocarbon cracking system including an electric hydrocarbon cracking furnace 200 according to one example configuration. A process control system according to the disclosure can also be used with other electric hydrocarbon cracking furnace configurations.

In the electric hydrocarbon cracking furnace 200 example of FIG. 2, a hydrocarbon feedstock 202 may initially be preheated in a heat exchanger 204 and subsequently further preheated by an electric heater 206. Dilution steam 208 may also initially be electrically heated 210 and thereafter combined with the preheated hydrocarbon feedstock 202 to create a steam-diluted hydrocarbon feedstock that is directed to a radiant section 212 of the electric hydrocarbon cracking furnace 200 for cracking of the hydrocarbon feedstock.

The steam-diluted hydrocarbon feedstock may travel through radiant coils 214 that are disposed within a heating compartment 222 of the radiant section 212 of the electric hydrocarbon cracking furnace 200. As represented in FIG. 2, the radiant section 212 may include multiple radiant coils 214. The radiant coils 214, and the steam-diluted hydrocarbon feedstock therein, are heated in the radiant section 212 to a temperature sufficient to cause a pyrolysis reaction that can crack the hydrocarbon feedstock. Cracking of the hydrocarbon feedstock in the radiant section 212 results in a cracked effluent gas 224 that can be directed from the radiant section 212 to a downstream location, such as to a quench tower or another apparatus, for cooling and separation of the cracked effluent gas 224. The cracking of the hydrocarbon feedstock within the radiant coils 214 is also the mechanism by which coke can be produced and deposited in the radiant coils 214.

In this example of the electric hydrocarbon cracking furnace 200, the heat used to crack the hydrocarbon feedstock in the radiant coils 214 is generated by several electric heating elements 216, 218, 220 that are arranged along a path of the radiant coils 214 through a heating compartment 222 of the radiant section 212. In other examples, a lesser or greater number of electric heating elements may be used. For example, only a single heating element may be present in some examples. The electric heating elements 216, 218, 220 can be configured to convert electrical energy into heat and to direct the heat into the heating compartment 222 to heat the hydrocarbon feedstock in the radiant coils 214.

In this example, a first electric heating element 216, a second electric heating element 218, and a third electric heating element 220 of the three electric heating elements are arrayed in a top-to-bottom arrangement along the path of the radiant coils 214 to thoroughly and uniformly heat the hydrocarbon feedstock in the radiant coils 214. The presence and locations of the electric heating elements 216, 218, 220 can also allow for better control over a hydrocarbon cracking operation performed in the radiant coils 214 or a decoking operation performed on the radiant coils 214. As is schematically represented in FIG. 2, thermal imaging devices 304 (described in more detail below) may be arranged outside the heating compartment 222 with a field of view encompassing at least a portion of the radiant coils 214 to measure a tube metal temperature of the portion of the radiant coils 214 in the field of view. In FIG. 2, the thermal imaging devices 304 are shown only for purposes of illustration, and the number and arrangement of the thermal imaging devices 304 may be different than what is shown.

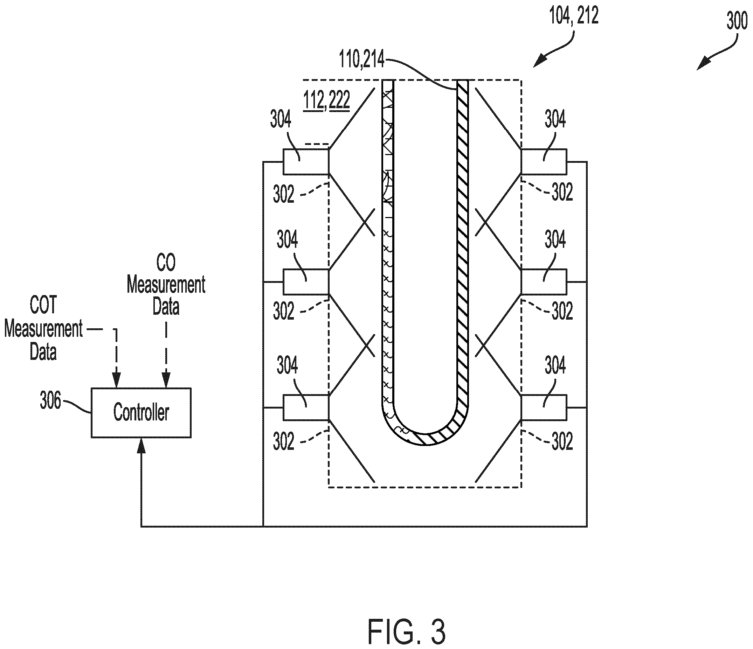

FIG. 3 depicts one example of a tube metal temperature measurement portion 300 of a process control system according to one example configuration. An enlarged view of a radiant coil disposed within a heating compartment of a radiant section of a hydrocarbon cracking furnace is shown in FIG. 3. The radiant coil and the radiant section is intended to represent, for example, the radiant coil 110 and the radiant section 104 of the hydrocarbon cracking furnace 100 of FIG. 1, or the radiant coil 214 and the radiant section 212 of the electric hydrocarbon cracking furnace 200 of FIG. 2.

In FIG. 3, a plurality of viewing windows 302 are located in the walls of the heating compartment 112, 222. A thermal imaging device 304 can be positioned at each viewing window 302 at a location outside of the heating compartment 112, 222, such that the thermal imaging devices 304 can image the radiant coils 110, 214 through the viewing windows 302. In some examples, the viewing windows may be covered or sealed with a material that is transparent to, semi-transparent to, or otherwise transmits infrared electromagnetic radiation to help protect the thermal imaging devices 304 from the heat of the heating compartment 112, 222. In other examples, the thermal imaging devices 304 may instead be protected from the heat of the heating compartment 112, 222 by locating the thermal imaging devices 304 in enclosures constructed of a material that is transparent to, semi-transparent to, or otherwise transmits infrared electromagnetic radiation. In still other examples, it may be possible to otherwise construct the heating compartment 112, 222 such that infrared electromagnetic radiation emitted by the heat of the radiant coils can pass through at least certain areas of the walls of the heating compartment 112, 222 and can be received by the thermal imaging devices 304.

In this example, six thermal imaging devices 304 are utilized for this purpose, but a lesser or greater number of thermal imaging devices 304 may be used in other examples. The number of thermal imaging devices 304 used in a given process control system may depend at least in part on the size of the radiant coils 110, 214 and the field of view of each thermal imaging device 304. As may be observed in FIG. 3, the thermal imaging devices 304 are positioned such that at least a portion of the outer surface of the radiant coils 110, 214 in the heating compartment 112, 222 lies within the collective fields of view of the thermal imaging devices 304.

The thermal imaging devices 304 can measure the surface temperature of the radiant coils 110, 214 - i.e., the tube metal temperature - along the path of the radiant coils 110, 214. The thermal imaging devices 304 may operate within the 700 nm to 1 mm wavelength of infrared electromagnetic radiation. For example, thermal imaging devices 304 may operate within various regions of the infrared spectrum - e.g., the short wavelength infrared (e.g., 1.4 µm - 3 µm) region, the medium wavelength infrared (e.g., 3 µm - 8 µm) region, and/or the long wavelength infrared (e.g., 8 µm - 15 µm) region. The thermal imaging devices 304 can use onboard logic to convert detected wavelengths of infrared electromagnetic radiation into electrical signals representing temperature. Measured temperatures, such as measured temperatures of the radiant coils 110, 214, may be displayed as a temperature (heat) map where different temperatures or different temperature ranges are represented by different colors. Measured temperatures of the radiant coils 110, 214 may instead or also be provided by the thermal imaging devices 304 in numerical form.

Tube metal temperature measurement data from the thermal imaging devices 304 may be provided to a controller 306. The controller 306 may be a programmable logic controller or another type of controller that includes a processor and a programmable memory and can communicate with other electronic devices. In some examples, the controller 306 can execute various programming logic, such as but not limited to, proportional-integral-derivative (PID) control loops to automatically control the decoking operation using the coil outlet temperature and tube metal temperature measurement data as control parameters (set points). In some examples, the controller 306 may include, or may be associated with a machine learning model that has been trained using tube metal temperature measurement data and other related hydrocarbon cracking furnace data associated with a hydrocarbon cracking furnace to which a corresponding process control system has been applied, or with another hydrocarbon cracking furnace having a like or similar construction and operating characteristics.

The tube metal temperature measurement data can be continuously provided to the controller 306 in some examples, such as during a decoking operation of the radiant coils 110, 214. In other examples, the tube metal temperature measurement data can be periodically provided to the controller 306. As described in more detail below, the controller 306 can use the tube metal temperature measurement data to control a decoking operation, a coke accumulation monitoring operation, or to monitor or control other hydrocarbon cracking furnace operations.

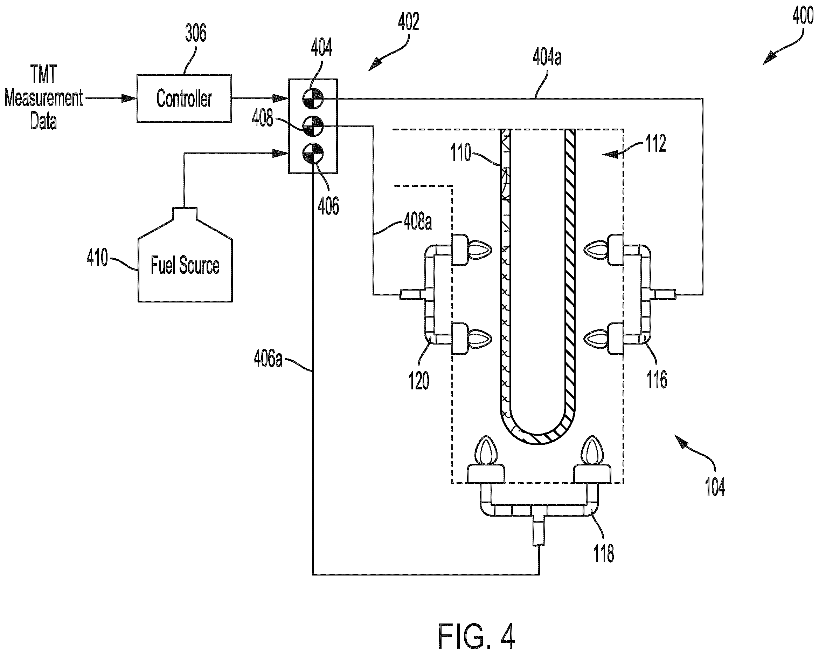

FIG. 4 is a schematic representation of a combustion-heated hydrocarbon cracking furnace decoking operation control system ("decoking operation control system") 400 according to one example configuration. In this example, the decoking operation control system 400 is applied to the radiant section 104 of the hydrocarbon cracking furnace 100 of FIG. 1.

According to this example, the controller 306 can receive tube metal temperature measurement data from the thermal imaging devices 304, which are located and arranged relative to the heating compartment 112 of the radiant section 104 as depicted in FIG. 3 but are not shown in FIG. 4 for reasons of clarity. The controller 306 can also be communicatively coupled to individual fuel control valves 404, 406, 408 of a fuel regulator 402. A combustible fuel source 410 may be fluidly coupled to the fuel regulator 402 and fuel from the combustible fuel source 410 may be selectively distributed by the fuel control valves 404, 406, 408 to the combustion burner assemblies 116, 118, 120 in the radiant section 104 of the hydrocarbon cracking furnace 100 via associated fuel supply lines 404a, 406a, 408a.

In this example, the controller 306 can operate the fuel control valves 404, 406, 408 to regulate the fuel flow therethrough and to thereby independently control the heat output of some or all of the combustion burner assemblies 116, 118, 120 based on the received tube metal temperature measurements from the thermal imaging devices 304. For example, if the tube metal temperature measurement data received by the controller 306 indicates that a tube metal temperature of an area of the radiant coil 110 heated by the second side burner assembly 120 is lower than desired, the controller 306 may increase the heat output of the second side burner assembly 120 by operating the fuel control valve 408 to increase the fuel flow to the second side burner assembly 120. Contrarily, for example, if the tube metal temperature measurement data received by the controller 306 indicates one or more locations (hotspots) where the tube metal temperature of an area of the radiant coil 110 heated by the first side burner assembly 116 has become high enough to potentially damage the radiant coil 110, the controller 306 may reduce the heat output of the first side burner assembly 116 by operating the fuel control valve 404 to decrease the fuel flow to the first side burner assembly 116. In this manner, areas of the radiant coil 110 having heavier coke deposits may have a greater amount of heat directed thereto while areas of the radiant coil 110 having lighter coke deposits may have a lesser amount of heat directed thereto. Such control over the heat output of the combustion burner assemblies 116, 118, 120 also allows for greater control of the rate of heat input to the radiant coil 110 or certain areas of the radiant coil 100, which can be based for example, on a measured rate of change of the temperature of the radiant coil 110. In other examples, various combinations of the combustion burner assemblies 116, 118, 120 may also or instead be simultaneously controlled by the controller 306 as needed to adjust the amount of heat applied to the radiant coil 110 during a decoking operation.

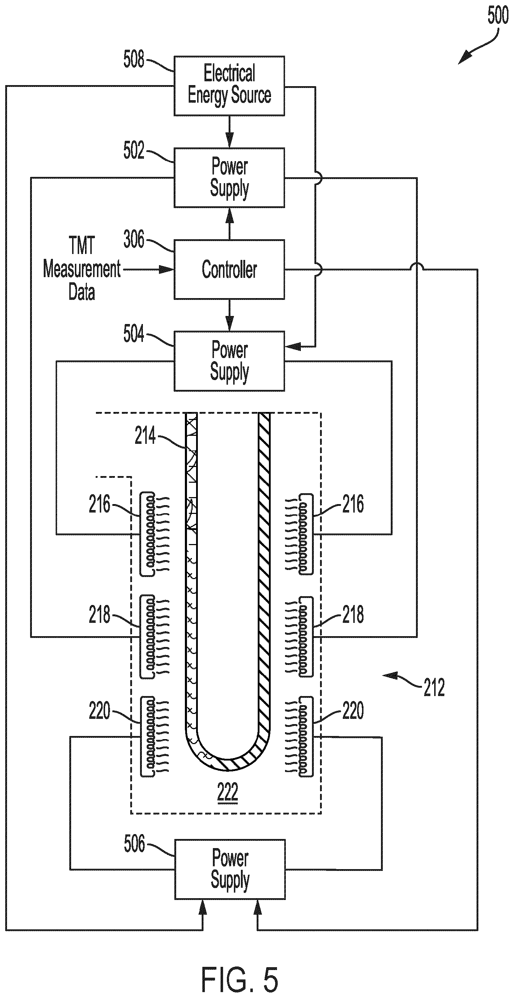

FIG. 5 is a schematic representation of an electrically-heated hydrocarbon cracking furnace decoking operation control system ("decoking operation control system") 500 according to one example configuration. In this example, the decoking operation control system 500 is applied to the radiant section 212 of the electric hydrocarbon cracking furnace 200 of FIG. 2.

According to this example, the controller 306 can receive tube metal temperature measurement data from the thermal imaging devices 304, which are located and arranged relative to the heating compartment 222 of the radiant section 212 as depicted in FIG. 3 but are not shown in FIG. 4 for reasons of clarity. The controller 306 can also be communicatively coupled to a plurality of electric power supplies 502, 504, 506 that are electrically connected to one or more electrical energy sources 508. The electric power supplies 502, 504, 506 are also electrically connected to respective ones of the electric heating elements 216, 218, 220. Thus, electrical energy from the electric power supplies 502, 504, 506 may be selectively and variably transmitted to the electric heating elements 216, 218, 220 in the radiant section 212 of the electric hydrocarbon cracking furnace 200 at the instruction of the controller 306.

In this example, the controller 306 can independently operate the electric power supplies 502, 504, 506 to thereby independently adjust the heat output of some or all of the electric heating elements 216, 218, 220 based on the received tube metal temperature measurements from the thermal imaging devices 304. For example, if the tube metal temperature measurement data received by the controller 306 indicates that a tube metal temperature of an area of the radiant coil 214 heated by the first electric heating element 216 is lower than desired, the controller 306 may cause the heat output of the first electric heating element 216 to be increased by instructing the corresponding electric power supply 504 to increase the output of electrical energy to the first electric heating element 216. Contrarily, for example, if the tube metal temperature measurement data received by the controller 306 indicates one or more locations (hotspots) where the tube metal temperature of an area of the radiant coil 214 heated by the third electric heating element 220 has become high enough to potentially damage the radiant coil 214, the controller 306 may cause the heat output of the third electric heating element 220 to be reduced by instructing the corresponding electric power supply 506 to decrease the output of electrical energy provided by electric power supply 506 to the third electric heating element 220. In this manner, the heat output of the electric heating elements 216, 218, 220 can be controlled to heat the radiant coil 214 and to perform operational control of hydraulic cracking furnace operations as described above with respect to the hydrocarbon cracking furnace 100 and the decoking operation control system 400 of FIG. 4. In other examples, various combinations of the electric heating elements 216, 218, 220 may also or instead be simultaneously controlled by the controller 306 as needed to adjust the amount of heat applied to the radiant coil 214 during a decoking operation.

In either example of the decoking operation control system 400, 500, the ability to adjust the radiant coil temperature at different locations along the radiant coil 110, 214 based on the tube metal temperature measurements from the thermal imaging devices 304 can help to optimize the associated decoking operation. For example, an area of the radiant coil 110, 214 that has a higher coke accumulation will tend to have a higher measured temperature, as the coke acts as a heat insulator that impedes the transfer of heat from the radiant coil surface into the hydrocarbon feedstock. Such areas of higher coke accumulation can be detected by the thermal imaging devices 304 based on their higher temperatures in comparison to other areas of the radiant coil 110, 214. The heat input to an area(s) of the radiant coil 110, 214 having a detected higher amount of coke accumulation can be increased by selectively adjusting the heat output of the combustion burner assemblies 116, 118, 120 or the electric heating elements 216, 218, 220 to more rapidly remove the coke and to reduce the time required to perform the decoking operation. Controlling the heat input to the radiant coil 110, 214 based on measured tube metal temperatures provided by the thermal imaging devices 304 may also avoid the generation of hotspots that can be caused by overheating the radiant coil 110, 214 at locations of higher coke accumulation, which can damage the radiant coil.

In some examples, a mechanism (e.g., one or more thermocouples) may be provided to measure the temperature of the cracked effluent gas or a decoking effluent flowing through a radiant coil at the outlet of the radiant coil from the radiant section of a hydrocarbon cracking furnace. This temperature is commonly referred to as the coil outlet temperature (COT). When multiple radiant coils are present, the coil outlet temperature of one, some, or all of the radiant coils may be measured. The coil outlet temperature can serve as the primary parameter for controlling a hydrocarbon cracking operation in the hydrocarbon cracking furnace. For example, it may be known that to achieve proper cracking of a given hydrocarbon feedstock, the radiant coils of the hydrocarbon cracking furnace should be subjected to sufficient heat in the radiant section to produce a cracked effluent gas stream having some predetermined coil outlet temperature. The coil outlet temperature may be similarly used as a target parameter for a radiant coil decoking operation.

In some examples, tube metal temperature measurement by thermal imaging as described above may be used in conjunction with coil outlet temperature measurement to optimize a radiant coil decoking operation. For example, a radiant coil decoking operation may be conducted using, as the controlling parameter of the heat input to the radiant coils, a predetermined target coil outlet temperature at which it is known that the accumulated coke in the radiant coils can be adequately removed. However, because coke accumulations within the radiant coils are seldom if ever uniform along the radiant coil length, tube metal temperature measurements from one or more thermal imaging devices (e.g., the thermal imaging devices 304 of FIG. 3) can be used in conjunction with coil outlet temperature measurements to optimize temperature control during the decoking operation. For example, the coil outlet temperature can be monitored and the overall heat input can be automatically adjusted if necessary to achieve the target coil outlet temperature, while tube metal temperature measurements obtained via thermal imaging can be concurrently used to automatically adjust the heat output of individual heat sources to account for discrepancies in coke accumulation along the radiant coil length and to avoid hot spotting the radiant coils, while simultaneously maintaining the desired amount of overall heat input.

As indicated in FIG. 3 in this regard, the controller 306 can receive coil outlet temperature (COT) measurement data in conjunction with the tube metal temperature measurement data from the thermal imaging devices 304 during a decoking operation, and can use this temperature measurement data to automatically adjust the coil outlet temperature and/or the individual heat input of one or more of the burner assemblies 116, 118, 120 or the electric heating elements 216, 218, 220 of the hydrocarbon cracking furnaces 100, 200. The controller 306 can execute various programming logic, such as but not limited to, proportional-integral-derivative (PID) control loops to automatically control the decoking operation using the coil outlet temperature and tube metal temperature measurement data as control parameters (set points). In a similar manner, it may also be possible for the controller 306 to use the same combination of temperature measurement data to automatically control the coil outlet temperature and to ensure a uniform heating of the radiant coils during a cracking operation of a hydrocarbon cracking furnace.

In one example of using the coil outlet temperature in conjunction with tube metal temperature measurement data from the one or more thermal imaging devices 304 associated with the hydrocarbon cracking furnace 100 of FIG. 4, the controller 306 can be programmed to use the coil outlet temperature as the controlling parameter defining the required total heat input to the radiant coil 110. Simultaneously therewith, the controller 306 can use the tube metal temperature measurements of sections of the radiant coil 110 corresponding to different ones of the individually controllable burner assemblies 116, 118, 120 to determine and control a percentage of the total heat input to be contributed by each burner assembly 116, 118, 120. For example, when controlling a hydrocarbon cracking operation of the hydrocarbon cracking furnace 100, the controller 306 may, based on received tube metal temperature data from the thermal imaging devices 304, control the first burner assembly 116 to contribute 35% of the total heat input, the second burner assembly 118 to contribute 20% of the total heat input, and the third burner assembly to contribute 45% of the total heat input. Thus, the total heat input to the radiant coil required to maintain the target coil outlet temperature may be maintained while simultaneously detecting and accounting for temperature differences at different locations of the radiant coil 110. A similar procedure may be employed by the controller 306 to control a decoking operation of the radiant coil 110, but where burner assembly heat output may be based more on localized radiant coil temperature measurements (e.g., detected hotspots) rather than differences in the temperatures of entire radiant coil sections.

In some examples, the amount of carbon monoxide present in the decoking effluent flowing through a radiant coil at the outlet of the radiant coil from the radiant section of a hydrocarbon cracking furnace can also be measured and used as a control parameter of a decoking process. The amount of carbon monoxide present in the decoking effluent can indicate how much accumulated coke is being removed from the radiant coils during a decoking operation, and a rate of change of the amount of carbon monoxide present in the decoking effluent can indicate how quickly the accumulated coke is being removed. In one example, carbon monoxide measurement data may be provided to the controller 306 in addition to the coil output temperature and tube metal temperature measurement data as described above, and can be further used by the controller 306 as a decoking operation control parameter. For example, the heat input to the radiant coils during a decoking operation may be adjusted by the controller 306 so as not to exceed a predetermined amount of measured carbon monoxide in the decoking effluent. Likewise, a decline in the amount of measured carbon monoxide in the decoking effluent may act as a trigger that causes the controller 306 to reduce the heat input to the radiant coils. A lack of measured carbon monoxide in the decoking effluent or a carbon monoxide measurement that meets a minimum threshold value may also be used as a trigger that causes the controller 306 to terminate the decoking operation.

In some examples, the tube metal temperature may be used as the primary control parameter for automatic control of a hydrocarbon cracking furnace operation instead of the coil outlet temperature. For example, based on prior operating data, and/or based on experimental/modeling data, the controller 306 may be provided with an expected (target) distribution of the tube metal temperature along the length of the radiant coils of the hydrocarbon cracking furnace. Based on a tube metal temperature distribution indicated by tube metal temperature measurement data received by the controller 306 from one or more thermal imaging devices, the controller 306 can adjust the heat input provided to the radiant coils by one or more heat sources so that the measured tube metal temperature distribution matches the target tube metal temperature distribution. In such an example, the coil output temperature may be omitted as a control parameter. Alternatively, the coil output temperature may be measured and provided to the controller 306 as a secondary control parameter, such as a minimum temperature threshold value or as a not-to-exceed temperature threshold value.

In some examples, one or more thermal imaging devices (e.g., the thermal imaging devices 304 of FIG. 3) may be arranged to measure the tube metal temperature of the radiant coils of a hydrocarbon cracking furnace as described herein to determine when it is time to perform a decoking operation on the radiant coils. For example, one or more thermal imaging devices may measure the temperature of the radiant coils during a hydrocarbon cracking operation and may continuously or periodically provide tube metal temperature measurement data to a computing device. Changes in the tube metal temperature over time, or temperature values at one or more locations of the radiant coils that reach or exceed a predetermined temperature, may be analyzed and interpreted by a processor of the computing device to indicate a need to perform a radiant coil decoking operation. In other examples, a decoking operation may thereafter be automatically initiated or scheduled by the computing device. In some examples, the computing device may be a controller, such as the controller 306

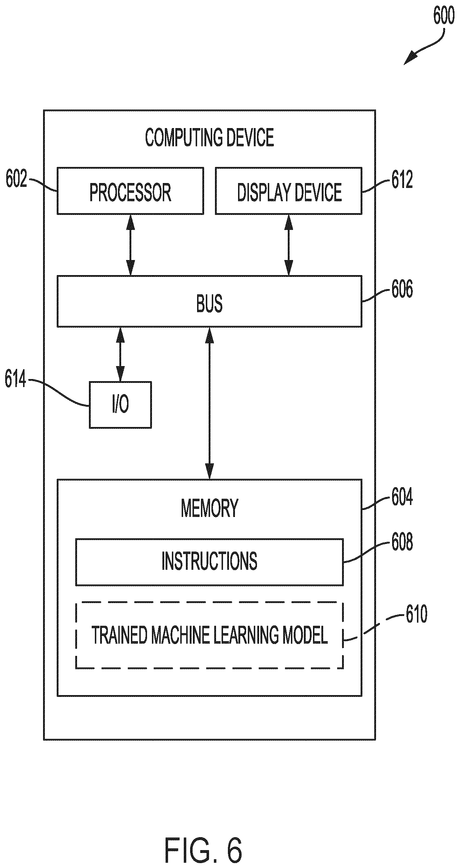

FIG. 6 is a block diagram depicting one example of a computing device 600 that is usable as a controller (e.g., controller 306) to, in conjunction with other components, control an operation of a hydraulic cracking furnace. While FIG. 6 shows the computing device 600 as including certain components, other examples may involve more, fewer, or different components than are shown in FIG. 6. The computing device 600 may be communicatively coupled to one or more thermal imaging device, such as the thermal imaging devices 305 of FIG. 3, that may be configured to measure the tube metal temperature of one or more radiant coils of the hydraulic cracking furnace. The computing device 600 is shown to include a processor 602 that may be communicatively coupled to a memory 604 by a bus 606. The processor 602 can include one processor or multiple processors. Non-limiting examples of the processor 602 include a Field-Programmable Gate Array (FPGA), an application specific integrated circuit (ASIC), a microprocessor, or any combination of these. Instructions 608 may be stored in the memory 604. Output generated by the processor 602 can be presented via various mediums, including on a display device 610 that is communicatively coupled to the processor 602 by the bus 606.

The instructions 608 are executable by the processor 602 for causing the processor 602 to perform various operations. In some examples, the instructions 608 can include processor specific instructions generated by a compiler or an interpreter from code written in any suitable computer-programming language, such as C, C++, C#, Java, or Python. Through the instructions 608, the processor 602 may operate as described above to perform the various operations of the computing device 600 related to controlling a hydraulic cracking furnace operation.

The memory 604 can include one memory device or multiple memory devices. The memory 604 can be non-volatile and may include any type of memory device that retains stored information when powered off. Non-limiting examples of the memory 604 include electrically erasable and programmable read-only memory (EEPROM), flash memory, or any other type of non-volatile memory. At least some of the memory device includes a non-transitory computer-readable medium from which the processor 602 can read the instructions 608. A non-transitory computer-readable medium can include electronic, optical, magnetic, or other storage devices capable of providing the processor 602 the instructions 608 or other program code. As shown in FIG. 6, the memory may also include a trained machine earning model 610 in some examples. Non-limiting examples of a non-transitory computer-readable medium include magnetic disk(s), memory chip(s), ROM, random-access memory (RAM), an ASIC, a configured processor, optical storage, or any other medium from which a computer processor can read the instructions 608.

The computing device 600 can additionally include a display device 612 and an input/output interface 614. Tube metal temperature maps, numerical tube metal temperature data, and various other information relating to system operations can be presented to an operator on the display device 612. The processor 602 can communicate with the input/output interface 614 and the display device 612 over the bus 606. The input/output interface 614 can be communicatively coupled to a keyboard, a pointing device, a display, or other computer input/output devices. The input/output interface 614 can also be communicatively coupled to the thermal imaging devices 304. Thus, the computing device 600 (e.g., controller 306) can receive, via the input/output interface 614, inputs in the form of tube metal temperature data from the thermal imaging devices 304. Likewise, the computing device 600 can transmit, via the input/output interface 614, control signals to individually or collectively control the heat output of multiple heat sources associated with a radiant section of a hydrocarbon cracking furnace, such as in a manner previously described with respect to the decoking operation control system 400 of FIG. 4 or the decoking operation control system 500 of FIG. 5.

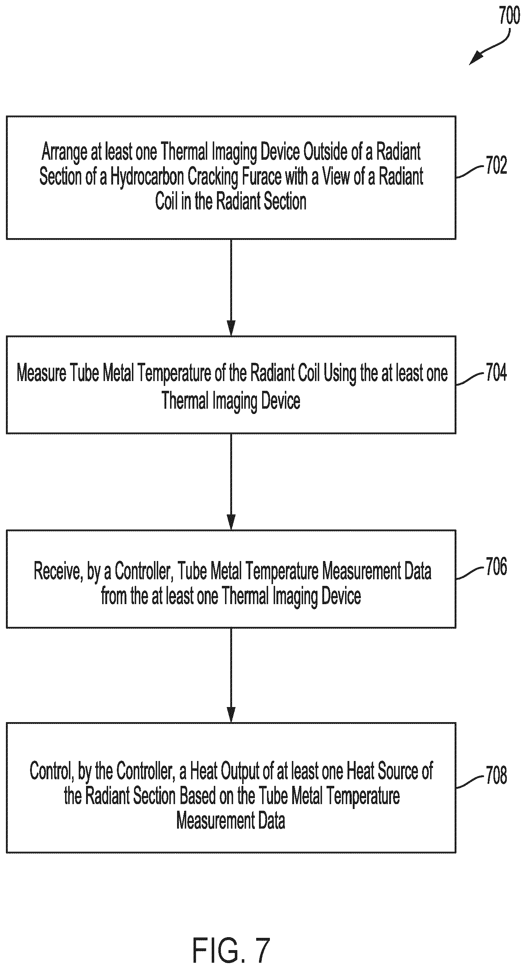

FIG. 7 is a flowchart characterizing one example of a method of controlling a hydrocarbon cracking furnace operation. In one example, the hydrocarbon cracking furnace operation may be a radiant coil decoking operation. In other examples, the hydrocarbon cracking furnace operation may be a hydrocarbon cracking operation or a coke accumulation monitoring operation.

As indicated in block 702, at least one thermal imaging device may be arranged outside of a radiant section of the hydrocarbon cracking furnace with a view of a radiant coil located within the radiant section. The at least one thermal imaging device may be a plurality of thermal imaging devices that are distributed along a path of the radiant coil. The radiant coil may be a plurality of radiant coils that pass thorough a heating compartment of the radiant section. Viewing windows may be located in walls of the heating compartment to provide the thermal imaging devices with a view of the radiant coils.

As indicated in block 704, the thermal imaging devices can measure a tube metal temperature of the radiant coil. The tube metal temperature of the radiant coil can indicate, for example, the progress of a radiant coil decoking operation, or hot spots that could potentially damage the radiant coil.

As indicated in block 706, a controller can receive tube metal temperature measurement data from the thermal imaging device. In some examples, the tube metal temperature measurement data may be continuously received by the controller. In some examples, the tube metal temperature measurement data may be periodically received by the controller, such as at regularly scheduled intervals.

As indicated in block 708, the controller can use the tube metal temperature measurement data received from the thermal imaging device to control a heat output of at least one heat source of the radiant section that is located along a path of the radiant coil. The at least one heat source may be a plurality of heat sources, which may be distributed along the path of the radiant coil to provide a uniform heating thereof. In some examples, the heat source(s) may be a burner assembly that generates heat by burning a combustible fuel. In other examples, the heat source(s) may be an electric heating element that converts electrical energy into heat. In some examples, the heat output of multiple heat sources may be individually controlled by the controller, or may alternatively be controlled in sets or groups of heat sources.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A system for controlling a hydrocarbon cracking furnace operation comprising:
a hydrocarbon cracking furnace comprising a radiant section, a radiant section heating compartment, a radiant section heat source, and a radiant coil at least partially extending through the radiant section heating compartment;
a thermal imaging device arranged outside of the heating compartment, the thermal imaging device having a field of view encompassing at least a portion of the radiant coil and operable to measure a tube metal temperature of the portion of the radiant coil in the field of view; and
a controller communicatively coupled to the thermal imaging device and operable to control a heat output of the radiant section heat source based on tube metal temperature measurement data received from the thermal imaging device.

2. The system of claim 1, further comprising a viewing window in a wall of a radiant section heating compartment through which the radiant coil is within the field of view of the thermal imaging device, and wherein the viewing window is an aperture through the wall that is sealed by a material that is transparent or semi-transparent to infrared electromagnetic radiation or a portion of the wall that is transparent or semi-transparent to infrared electromagnetic radiation.

3. The system of claim 1, wherein a plurality of thermal imaging devices are present and are distributed along a path of the radiant coil through the radiant section heating compartment; optionally, wherein a plurality of radiant coils are present in the radiant section heating compartment and are within a collective field of view of the plurality of thermal imaging devices; further optionally, wherein a plurality of radiant section heat sources are present and are distributed along a path of the plurality of radiant coils through the radiant section heating compartment; yet further optionally, wherein:
coil outlet temperature measurement data is also receivable by the controller and is usable by the controller as a primary control parameter governing an overall heat input to the heating compartment; and
the tube metal temperature measurement data is additionally usable by the controller to control an amount of heat contributed to the overall heat input by each of the plurality of radiant section heat sources.

4. The system of claim 1, wherein the hydrocarbon cracking furnace is a combustion-heated hydrocarbon cracking furnace, and wherein:
the radiant section includes a plurality of burner assemblies that generate heat by a combustion of fuel received from a combustible fuel source;
a fuel regulator is communicatively coupled to the controller, the fuel regulator interposed between the combustible fuel source and the plurality of burner assemblies and including a plurality of fuel control valves;
each respective fluid control valve is fluidly connected to a corresponding one of the burner assemblies by a fuel supply line; and
the controller is operable to independently control a heat output of each burner assembly by selectively operating the fuel control valves to regulate a flow of the fuel to each burner assembly.

5. The system of claim 1, wherein the hydrocarbon cracking furnace is an electric hydrocarbon cracking furnace, and wherein:
the radiant section includes a plurality of electric heating elements that generate heat by converting electrical energy received from an electrical energy source;
a plurality of electric power supplies are communicatively coupled to the controller, and each respective electric power supply is electrically connected between the electrical energy source and a corresponding one of the electric heating elements; and
the controller is operable to independently control a heat output of each electric heating element by selectively operating the electric power supplies to regulate a transmission of electrical energy to each electric heating element.

6. A method comprising:
arranging a thermal imaging device outside of a radiant section heating compartment of a radiant section of a hydrocarbon cracking furnace that further comprises a radiant section heat source and a radiant coil that extends at least partially through the radiant section heating compartment, the thermal imaging device having a field of view encompassing at least a portion of the radiant coil,
measuring a tube metal temperature of the portion of the radiant coil in the field of view using the thermal imaging device;
receiving, by a controller, tube metal temperature measurement data from the thermal imaging device; and
controlling, by the controller, based on the tube metal temperature measurement data, a heat output of the radiant section heat source.

7. The method of claim 6, wherein a plurality of thermal imaging devices are present and are distributed along a path of the radiant coil through the radiant section heating compartment.

8. The method of claim 7, wherein a plurality of radiant coils are present in the radiant section heating compartment and are within a collective field of view of the plurality of thermal imaging devices; optionally, wherein a plurality of radiant section heat sources are present and are distributed along a path of the plurality of radiant coils through the radiant section heating compartment; further optionally, wherein:
coil outlet temperature measurement data is also received by the controller and is used by the controller as a primary control parameter to govern an overall heat input to the heating compartment; and
the tube metal temperature measurement data is additionally used by the controller to control an amount of heat contributed to the overall heat input by each of the plurality of radiant section heat sources.

9. The method of claim 6, wherein the hydrocarbon cracking furnace is a combustion-heated hydrocarbon cracking furnace, and wherein:
the radiant section includes a plurality of burner assemblies that generate heat by a combustion of fuel received from a combustible fuel source;
a fuel regulator is communicatively coupled to the controller, the fuel regulator interposed between the combustible fuel source and the plurality of burner assemblies and including a plurality of fuel control valves;
each respective fluid control valve is fluidly connected to a corresponding one of the burner assemblies by a fuel supply line; and
the controller independently controls a heat output of each burner assembly by selectively operating the fuel control valves to regulate a flow of the fuel to each burner assembly.

10. The method of claim 6, wherein the hydrocarbon cracking furnace is an electric hydrocarbon cracking furnace, and wherein:
the radiant section includes a plurality of electric heating elements that generate heat by converting electrical energy received from an electrical energy source;
a plurality of electric power supplies are communicatively coupled to the controller, and each respective electric power supply is electrically connected between the electrical energy source and a corresponding one of the electric heating elements; and
the controller independently controls a heat output of each electric heating element by selectively operating the electric power supplies to regulate a transmission of electrical energy to each electric heating element.

11. The method of claim 6, wherein the hydrocarbon cracking furnace operation is a radiant coil decoking operation.

12. The method of claim 11, wherein measurement data indicating an amount of carbon monoxide present in a decoking effluent is also received by the controller and is used in part by the controller to control the heat output of the radiant section heat source during the radiant coil decoking operation.

13. A method of monitoring a hydrocarbon cracking furnace comprising:
arranging at least one thermal imaging device outside of a radiant section of the hydrocarbon cracking furnace with a field of view encompassing at least a portion of a radiant coil in the radiant section;
measuring, during a hydrocarbon cracking operation, a tube metal temperature of the portion of the radiant coil in the field of view using the thermal imaging device to generate tube metal temperature measurement data;
transmitting the tube metal temperature measurement data to a computing device;
determining, by a processor of the computing device, by analyzing the tube metal temperature measurement data, that a change in the measured tube metal temperature over time or a measured temperature value at one or more locations of the radiant coil that has reached or exceeds a predetermined temperature, indicates a need to perform a decoking operation on the radiant coil; and
initiating or scheduling, by the computing device, a decoking operation on the radiant coil.

14. The method of claim 13, wherein the tube metal temperature measurement data is continuously or periodically provide to the computing device.

15. The method of claim 13, wherein the computing device also controls the decoking operation.
